# EUROPEAN PATENT APPLICATION

(11) **EP 4 417 666 A1**
(43) Date of publication of application: **21.08.2024**
(21) Application number: 22881006.5
(22) Date of filing: 11.10.2022
(51) Int. Cl.: C09K 5/04

(54) **OLIGOMER, OLIGOMER-CONTAINING COMPOSITION, AND REFRIGERANT COMPOSITION CONTAINING FLUORINATED-HYDROCARBON-CONTAINING REFRIGERANT AND HAVING IMPROVED SLIDABILITY**

(30) Priority: 12.10.2021 JP 2021167414
(71) Applicant: Daikin Industries, Ltd., Osaka-shi, Osaka 530-0001 (JP)
(72) Inventor: ITANO, Mitsushi, Osaka-shi, Osaka 530-0001 (JP); GOBOU, Kenji, Osaka-shi, Osaka 530-0001 (JP); TSUCHIYA, Tatsumi, Osaka-shi, Osaka 530-0001 (JP); NAKAUE, Tsubasa, Osaka-shi, Osaka 530-0001 (JP)
(74) Representative: Hoffmann Eitle
(86) International application number: PCT/JP2022/037872
(87) International publication number: WO 2023/063311

(57) **Abstract**

The present disclosure provides a refrigerant composition comprising a refrigerant containing a fluorinated hydrocarbon, and having improved sliding properties for the sliding portions of vapor-compression refrigerating machines.

Specifically, the present disclosure provides a refrigerant composition comprising a refrigerant containing a fluorinated hydrocarbon, and an oligomer that is a polymer of a halogenated hydrocarbon,
wherein
(1) the fluorinated hydrocarbon comprises fluorinated ethylene, and
(2) the oligomer is at least one of an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and an oligomer B having a molecular weight of 200 to 900 that is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1.

## Description

### Technical Field

The present disclosure relates to a refrigerant composition comprising a refrigerant containing a fluorinated hydrocarbon, and having improved sliding properties, and to an oligomer and a composition comprising an oligomer.

### Background Art

Patent Literature (PTL) 1 discloses a highly stable hydrofluoroolefin (HFO) refrigerant composition for use in vapor-compression refrigerating machines that has improved sliding properties for the sliding portions of vapor-compression refrigerating machines.

Specifically, Claim 1 of PTL 1 recites "[a]n HFO refrigerant composition comprising at least one type of HFO refrigerant and a polymer of halogenated propene represented by C₃HₐF_{b}Cl_{c} (provided that a + b + c = 6, a = an integer of 1 to 3, b = an integer of 3 to 5, and c = an integer of 0 to 1) that is an oligomer having a molecular weight of 200 to 900." Claim 2 of PTL 1 recites various kinds of fluorinated propene as HFO refrigerants.

### Citation List

### Patent Literature

PTL 1: WO2012/074121

### Summary of Invention

### Technical Problem

The inventors of the present disclosure performed independent examination and conceived of the idea that no prior art had developed refrigerant compositions containing fluorinated ethylene among HFO refrigerants and having improved sliding properties and that there is room for further improvement in sliding properties for refrigerant compositions containing fluorinated propene among HFO refrigerants. An object of the present disclosure is to solve these unique problems.

### Solution to Problem

1. A refrigerant composition comprising a refrigerant containing a fluorinated hydrocarbon, and an oligomer that is a polymer of a halogenated hydrocarbon,
   wherein
   (1) the fluorinated hydrocarbon comprises fluorinated ethylene, and
   (2) the oligomer is at least one of an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and an oligomer B having a molecular weight of 200 to 900 that is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1.
2. A refrigerant composition comprising a refrigerant containing a fluorinated hydrocarbon, and an oligomer that is a polymer of a halogenated hydrocarbon,
   wherein
   (1) the fluorinated hydrocarbon comprises fluorinated propene,
   (2) the oligomer is an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1.
3. The refrigerant composition according to Item 1, wherein the fluorinated ethylene is at least one member selected from the group consisting of 1,1-difluoroethylene (HFO-1132a), Z-1,2-difluoroethylene (Z-HFO-1132), E-1,2-difluoroethylene (E-HFO-1132), and 1,1,2-trifluoroethylene (HFO-1123).
4. The refrigerant composition according to Item 2, wherein the fluorinated propene is at least one member selected from the group consisting of 2,3,3,3-tetrafluoropropene (HFO-1234yf), E-1,3,3,3-tetrafluoropropene (E-HFO-1234ze), Z-1,3,3,3-tetrafluoropropene (Z-HFO-1234ze), E-1,2,3,3,3-pentafluoropropene (E-HFO-1225ye), Z-1,2,3,3,3-pentafluoropropene (Z-HFO-1225ye), 1,1,3,3,3-pentafluoropropene (HFO-1225zc), and 3,3,3-trifluoropropene (HFO-1243zf).
5. The refrigerant composition according to Item 1 or 3, wherein the fluorinated hydrocarbon further comprises fluorinated propene.
6. The refrigerant composition according to any one of Items 1 to 5, wherein the content of the oligomer is 0.05 to 10 parts by mass per 100 parts by mass of the refrigerant.
7. The refrigerant composition according to any one of Items 1 to 6, wherein the refrigerant composition further comprises a refrigeration oil.
8. The refrigerant composition according to any one of Items 1 to 7, wherein the refrigerant composition is used for at least one member selected from the group consisting of mobile air conditioners, refrigerators, chillers, container refrigeration apparatuses, home air conditioners, and air conditioners for business use.
9. An oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1.
10. A composition comprising an oligomer that is a polymer of a halogenated hydrocarbon, the oligomer being an oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1.

### Advantageous Effects of Invention

The present disclosure provides a refrigerant composition comprising a refrigerant containing a fluorinated hydrocarbon, and having improved sliding properties for the sliding portions of vapor-compression refrigerating machines.

### Description of Embodiments

### 1. Refrigerant Composition Comprising Refrigerant Containing Fluorinated Hydrocarbon

The refrigerant composition comprising a refrigerant containing a fluorinated hydrocarbon according to the present disclosure is described below.

The refrigerant composition comprising a refrigerant containing a fluorinated hydrocarbon according to the present disclosure comprises a refrigerant containing a fluorinated hydrocarbon, and an oligomer that is a polymer of a halogenated hydrocarbon. Since the refrigerant composition comprises the oligomer, sliding properties in the sliding portions of vapor-compression refrigerating machines are improved. Specifically, the refrigerant composition of the present disclosure can be broadly divided into the refrigerant composition of Embodiment 1, which comprises fluorinated ethylene as the fluorinated hydrocarbon in the refrigerant, and the refrigerant composition of Embodiment 2, which comprises fluorinated propene as the fluorinated hydrocarbon in the refrigerant. Each embodiment is described below.

### Refrigerant Composition of Embodiment 1

The refrigerant composition of Embodiment 1 is a refrigerant composition comprising a refrigerant containing a fluorinated hydrocarbon, and an oligomer that is a polymer of a halogenated hydrocarbon,
wherein
(1) the fluorinated hydrocarbon comprises fluorinated ethylene, and
(2) the oligomer is at least one of an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and an oligomer B having a molecular weight of 200 to 900 that is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1.

The refrigerant used in Embodiment 1 comprises a fluorinated hydrocarbon, and the fluorinated hydrocarbon comprises fluorinated ethylene.

The fluorinated ethylene is preferably at least one member selected from the group consisting of 1,1-difluoroethylene (HFO-1132a), Z-1,2-difluoroethylene (Z-HFO-1132), E-1,2-difluoroethylene (E-HFO-1132), and 1,1,2-trifluoroethylene (HFO-1123). In the present disclosure, among the above, at least one member selected from the group consisting of 1,1-difluoroethylene (HFO-1132a), E-1,2-difluoroethylene (E-HFO-1132), and 1,1,2-trifluoroethylene (HFO-1123) is more preferable in terms of stability. Among these, E-1,2-difluoroethylene (E-HFO-1132), which has a boiling point close to those of R410A and HFC-32, is even more preferable.

The fluorinated hydrocarbon may further comprise fluorinated propene in addition to the fluorinated ethylene. The fluorinated propene is not limited, and is, for example, at least one member selected from the group consisting of 2,3,3,3-tetrafluoropropene (HFO-1234yf), E-1,3,3,3-tetrafluoropropene (E-HFO-1234ze), Z-1,3,3,3-tetrafluoropropene (Z-HFO-1234ze), E-1,2,3,3,3-pentafluoropropene (E-HFO-1225ye), Z-1,2,3,3,3-pentafluoropropene (Z-HFO-1225ye), 1,1,3,3,3-pentafluoropropene (HFO-1225zc), and 3,3,3-trifluoropropene (HFO-1243zf). In Embodiment 1, use of fluorinated ethylene in combination with fluorinated propene is expected to achieve the effects of improving stability and reducing flammability.

In Embodiment 1, the content (lower limit) of the fluorinated ethylene in the refrigerant is not limited, and can be set to 5.0 mass% or more, 10.0 mass% or more, or 20.0 mass% or more. The content of the fluorinated ethylene can also be set so that the fluorinated ethylene makes up 100 mass% of the refrigerant. The content (upper limit) of the fluorinated ethylene is not limited, and can be set to 50.0 mass% or less, 40.0 mass% or less, or 33.0 mass% or less. When the refrigerant further comprise fluorinated propene, the content (lower limit) of the fluorinated propene is not limited, and can be set to 50.0 mass% or more, 60.0 mass% or more, or 67.0 mass% or more. The content (upper limit) of the fluorinated propene is not limited, and can be set to 95.0 mass% or less or 90.0 mass% or less.

In Embodiment 1, the refrigerant may comprise a known hydrofluorocarbon (HFC) refrigerant. Examples of HFC refrigerants include HFC-41, HFC-32, HFC-125, HFC-134a, HFC-143a, HFC-152a, HFC-161, HFC-245fa, HFC-227ea, and the like. The refrigerant may comprise one of these HFC refrigerants or a mixture of two or more of these HFC refrigerants. The content (lower limit) of the HFC refrigerant in the refrigerant is not limited, and can be set to 5.0 mass% or more or 10.0 mass% or more. The content (upper limit) of the HFC refrigerant is not limited, and can be set to 60.0 mass% or less or 50.0 mass% or less.

In Embodiment 1, as the oligomer that is a polymer of a halogenated hydrocarbon, at least one of an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and an oligomer B having a molecular weight of 200 to 900 that is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1, is used.

The refrigerant composition of Embodiment 1 comprises a specific oligomer; therefore, when it is used in vapor-compression refrigerating machines, sliding properties are improved in hot sliding portions, thus reducing polymer and pyrolysate generation and resulting in high stability. The above effects can presumably be achieved because the oligomer has properties similar to those of fluorine oil (e.g., having a low surface tension), and the oligomer has miscibility with fluorinated ethylene (further fluorinated propene) and refrigeration oil. The vapor-compression refrigerating machine is, for example, at least one member selected from the group consisting of mobile air conditioners, refrigerators, chillers, container refrigeration apparatuses, home air conditioners, and air conditioners for business use.

The oligomer A is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and has a molecular weight of 200 to 900.

The halogenated hydrocarbon A is, for example, at least one member selected from the group consisting of 1,1-difluoroethylene (HFO-1132a), Z-1,2-difluoroethylene (Z-HFO-1132), E-1,2-difluoroethylene (E-HFO-1132), 1,1,2-trifluoroethylene (HFO-1123), tetrafluoroethylene, and the like. For example, when E-1,2-difluoroethylene (E-HFO-1132) among these is used as a monomer, the structure of the oligomer A is shown below. The polymer represented by the following chemical formula (1) is an oligomer A having a molecular weight of 200 to 900. The oligomer A may be prepared by polymerizing the halogenated hydrocarbon A, which is a monomer, by a known polymerization method so that the oligomer A has a molecular weight of 200 to 900.

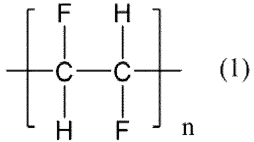

The oligomer B is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1, and has a molecular weight of 200 to 900.

The halogenated hydrocarbon B is, for example, at least one member selected from the group consisting of 2,3,3,3-tetrafluoropropene (HFO-1234yf), E-1,3,3,3-tetrafluoropropene (E-HFO-1234ze), Z-1,3,3,3-tetrafluoropropene (Z-HFO-1234ze), E-1,2,3,3,3-pentafluoropropene (E-HFO-1225ye), Z-1,2,3,3,3-pentafluoropropene (Z-HFO-1225ye), 1,1,3,3,3-pentafluoropropene (HFO-1225zc), 3,3,3-trifluoropropene (HFO-1243zf), and the like. The oligomer B may be prepared by polymerizing the halogenated hydrocarbon B, which is a monomer, by a known polymerization method so that the oligomer B has a molecular weight of 200 to 900.

The oligomer A and the oligomer B each have a molecular weight of 200 to 900, and preferably 300 to 700. When both oligomers have a molecular weight of less than 200, the oligomers have an unduly low viscosity; therefore, it is difficult to improve the sliding properties. In contrast, when both oligomers have a molecular weight exceeding 900, the oligomers are insoluble in refrigeration oil and may cause blocking of thin tubes, such as capillary tubes. Thus, as the oligomers, those having a molecular weight of 200 to 900 are used.

In Embodiment 1, the content of the oligomer (the oligomer A and/or the oligomer B) per 100 parts by mass of the refrigerant is not limited. The content of the oligomer (the oligomer A and/or the oligomer B) is preferably 0.05 to 10 parts by mass, and more preferably 1.0 to 9.0 parts by mass, per 100 parts by mass of the refrigerant. When the oligomer content exceeds 10 parts by mass, not only can there be no effect achieved by the amount exceeding 10 parts by mass, but when a refrigeration oil is used in combination, it may adversely affect the viscosity of the refrigeration oil and impair the properties of the refrigeration oil. It also may cause blocking of thin tubes, such as capillary tubes, due to the insoluble substance formed by the additionally polymerized oligomer.

Thus, from the viewpoint of suppressing or preventing additional polymerization of the oligomer (the oligomer A and/or the oligomer B), a polymerization retarder may be added to the refrigerant composition of Embodiment 1, if necessary. Examples of the polymerization retarder include hydroquinone, dialkylhydroquinone, dialkylhydroxytoluene, terpenes, phenothiazin, and benzoquinone.

The refrigerant composition of Embodiment 1 may further comprise a refrigeration oil, depending on its use. The refrigeration oil may be a known refrigeration oil. Examples of usable refrigeration oils include poly(oxy)alkylene glycols, polyvinyl ethers, polyphenylethers, copolymers of a poly(oxy)alkylene glycol or a poly(oxy)alkylene glycol monoether, and a polyvinyl ether, polyol esters, polycarbonates, silicone, polysiloxane, perfluoroethers, mineral oils, olefin polymers (which, however, are different from the oligomer A and oligomer B described above), alkyldiphenylalkanes, alkylnaphthalenes, and alkylbenzenes. Among these refrigeration oils, at least one member selected from the group consisting of polyalkylene glycols, polyol esters, polyvinyl ethers, and alkylbenzenes is preferable.

These refrigeration oils may be used singly or in a combination of two or more. The kinematic viscosity at 40°C of the refrigeration oil is not limited, and is preferably 5 to 400 cSt, and more preferably 30 to 400 cSt. The refrigeration oil that can be preferably used in Embodiment 1 is at least one member selected from the group consisting of polyalkylene glycols, polyol esters, polyvinyl ethers, and alkylbenzenes, and has a kinematic viscosity at 40°C of 5 to 400 cSt.

When a refrigeration oil is used, the amount of the refrigerant is preferably 1 to 5 parts by mass per 1 part by mass of the refrigeration oil. However, the amount of the refrigerant is not limited to this range, and may vary depending on the specifications of the oil tank of the vapor-compression refrigerating machine.

### Refrigerant Composition of Embodiment 2

The refrigerant composition of Embodiment 2 is a refrigerant composition comprising a refrigerant containing a fluorinated hydrocarbon, and an oligomer that is a polymer of a halogenated hydrocarbon, wherein
(1) the fluorinated hydrocarbon comprises fluorinated propene,
(2) the oligomer is an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1.

The refrigerant used in Embodiment 2 comprises a fluorinated hydrocarbon, and the fluorinated hydrocarbon comprises fluorinated propene. In the present specification, fluorinated propene encompasses hexafluoropropene, in which all of the hydrogen atoms of propene are replaced by fluorine atoms.

The fluorinated propene is preferably at least one member selected from the group consisting of 2,3,3,3-tetrafluoropropene (HFO-1234yf), E-1,3,3,3-tetrafluoropropene (E-HFO-1234ze), Z-1,3,3,3-tetrafluoropropene (Z-HFO-1234ze), E-1,2,3,3,3-pentafluoropropene (E-HFO-1225ye), Z-1,2,3,3,3-pentafluoropropene (Z-HFO-1225ye), 1,1,3,3,3-pentafluoropropene (HFO-1225zc), and 3,3,3-trifluoropropene (HFO-1243zf). In the present disclosure, among the above, at least one member selected from the group consisting of 2,3,3,3-tetrafluoropropene (HFO-1234yf) and Z-1,3,3,3-tetrafluoropropene (Z-HFO-1234ze) is more preferable in terms of stability and low toxicity.

In Embodiment 2, the content (lower limit) of the fluorinated propene in the refrigerant is not limited, and can be set to 30.0 mass% or more or 50.0 mass% or more. The content of the fluorinated propene can also be set so that the fluorinated propene makes up 100 mass% of the refrigerant. The content (upper limit) of the fluorinated propene is not limited, and can be set to 95.0 mass% or less, or 90.0 mass% or less.

In Embodiment 2, the refrigerant may comprise a known hydrofluorocarbon (HFC) refrigerant. Examples of HFC refrigerants include HFC-41, HFC-32, HFC-125, HFC-134a, HFC-143a, HFC-152a, HFC-161, HFC-245fa, HFC-227ea, and the like. The refrigerant may comprise one of these HFC refrigerants or a mixture of two or more of these HFC refrigerants. The content (lower limit) of the HFC refrigerant in the refrigerant is not limited, and can be set to 5.0 mass% or more or 10.0 mass% or more. The content (upper limit) of the HFC refrigerant is not limited, and can be set to 60.0 mass% or less or 50.0 mass% or less.

In Embodiment 2, as the oligomer that is a polymer of a halogenated hydrocarbon, an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1 is used.

The refrigerant composition of Embodiment 2 comprises a specific oligomer; therefore, when it is used in vapor-compression refrigerating machines, sliding properties are improved in hot sliding portions, thus reducing polymer and pyrolysate generation and resulting in high stability. The above effects can presumably be achieved because the oligomer has properties similar to those of fluorine oil (e.g., having a low surface tension), and the oligomer has miscibility with fluorinated propene and refrigeration oil. The vapor-compression refrigerating machine is, for example, at least one member selected from the group consisting of mobile air conditioners, refrigerators, chillers, container refrigeration apparatuses, home air conditioners, and air conditioners for business use.

The oligomer A is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and has a molecular weight of 200 to 900.

The halogenated hydrocarbon A is, for example, at least one member selected from the group consisting of 1,1-difluoroethylene (HFO-1132a), Z-1,2-difluoroethylene (Z-HFO-1132), E-1,2-difluoroethylene (E-HFO-1132), 1,1,2-trifluoroethylene (HFO-1123), tetrafluoroethylene, and the like. As described above for Embodiment 1, the oligomer A may be prepared by polymerizing the halogenated hydrocarbon A, which is a monomer, by a known polymerization method so that the oligomer A has a molecular weight of 200 to 900.

The oligomer A has a molecular weight of 200 to 900, and preferably 300 to 700. When the oligomer A has a molecular weight of less than 200, the oligomer A has an unduly low viscosity; therefore, it is difficult to improve the sliding properties. In contrast, when the oligomer A has a molecular weight exceeding 900, the oligomer A is insoluble in refrigeration oil and may cause blocking of thin tubes, such as capillary tubes. Thus, as the oligomer A, one having a molecular weight of 200 to 900 is used.

In Embodiment 2, the content of the oligomer A per 100 parts by mass of the refrigerant is not limited. The content of the oligomer A is preferably 0.05 to 10 parts by mass, and more preferably 1.0 to 9.0 parts by mass, per 100 parts by mass of the refrigerant. When the content of oligomer A exceeds 10 parts by mass, not only can there be no effect achieved by the amount exceeding 10 parts by mass, but when a refrigeration oil is used in combination, it may adversely affect the viscosity of the refrigeration oil and impair the properties of the refrigeration oil. It also may cause blocking of thin tubes, such as capillary tubes, due to the insoluble substance formed by the additionally polymerized oligomer A.

Thus, from the viewpoint of suppressing or preventing additional polymerization of the oligomer A, a polymerization retarder may be added to the refrigerant composition of Embodiment 2, if necessary. Examples of the polymerization retarder include hydroquinone, dialkylhydroquinone, dialkylhydroxytoluene, terpenes, phenothiazin, and benzoquinone.

The refrigerant composition of Embodiment 2 may further comprise a refrigeration oil, depending on its use. The refrigeration oil may be a known refrigeration oil. Examples of usable refrigeration oils include poly(oxy)alkylene glycols, polyvinyl ethers, polyphenylethers, copolymers of a poly(oxy)alkylene glycol or a poly(oxy)alkylene glycol monoether, and a polyvinyl ether, polyol esters, polycarbonates, silicone, polysiloxane, perfluoroethers, mineral oils, olefin polymers (which, however, are different from the oligomer A and oligomer B described above), alkyldiphenylalkanes, alkylnaphthalenes, and alkylbenzenes. Among these refrigeration oils, at least one member selected from the group consisting of polyalkylene glycols, polyol esters, polyvinyl ethers, and alkylbenzenes is preferable.

These refrigeration oils may be used singly or in a combination of two or more. The kinematic viscosity at 40°C of the refrigeration oil is not limited, and is preferably 5 to 400 cSt, and more preferably 30 to 400 cSt. The refrigeration oil that can be preferably used in Embodiment 2 is at least one member selected from the group consisting of polyalkylene glycols, polyol esters, polyvinyl ethers, and alkylbenzenes, and has a kinematic viscosity at 40°C of 5 to 400 cSt.

When a refrigeration oil is used, the amount of the refrigerant is preferably 1 to 5 parts by mass per 1 part by mass of the refrigeration oil. However, the amount of the refrigerant is not limited to this range, and may vary depending on the specifications of the oil tank of the vapor-compression refrigerating machine.

### 2. Oligomer That Is a Polymer of a Halogenated Hydrocarbon

The present disclosure also includes a disclosure of an oligomer that is a polymer of a halogenated hydrocarbon (also referred to below as "the oligomer of the present disclosure"), as well as the disclosure described above of the refrigerant composition comprising a refrigerant containing a fluorinated hydrocarbon, and an oligomer that is a polymer of a halogenated hydrocarbon.

Specifically, the oligomer of the present disclosure is an oligomer that is a polymer of a halogenated hydrocarbon, the oligomer being an oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1.

The oligomer of the present disclosure functions as a lubricant that improves sliding properties in sliding portions when a refrigerant (in particular, a refrigerant containing at least one fluorinated hydrocarbon selected from the group consisting of fluorinated ethylene, fluorinated propene, and the like) is used in vapor-compression refrigerating machines.

### 3. Composition Comprising an Oligomer That Is a Polymer of a Halogenated Hydrocarbon

The present disclosure also includes a disclosure of a composition comprising an oligomer that is a polymer of a halogenated hydrocarbon (also referred to below as "the composition of the present disclosure"), as well as the disclosure described above of the refrigerant composition comprising a refrigerant containing a fluorinated hydrocarbon, and an oligomer that is a polymer of a halogenated hydrocarbon.

Specifically, the composition of the present disclosure is a composition comprising an oligomer that is a polymer of a halogenated hydrocarbon, the oligomer being an oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1. The content of the oligomer in the composition of the present disclosure is not limited, and can be set from a wide range, depending on the use of the composition, such as from the range of 0.05 to 10 mass%.

### Examples

The present disclosure (in particular, a refrigerant composition) is described in more detail below with reference to Examples and Comparative Examples.

### Preparation of Oligomers O1 and O2

50 g of E-1,2-difluoroethylene (E-HFO-1132) (CHF=CHF) was sealed in a 500-cc autoclave made of SUS. The autoclave was dipped in liquid nitrogen to solidify the E-HFO-1132, and the noncondensable gas (air) in the container was removed using a vacuum pump (i.e., deaerated).

In the same manner, 50 g of 2,3,3,3-tetrafluoropropene (HFO-1234yf) (CF₃CF=CH₂) was sealed in another 500-cc autoclave made of SUS. The autoclave was dipped in liquid nitrogen to solidify the HFO-1234yf, and the noncondensable gas (air) in the container was removed using a vacuum pump (i.e., deaerated).

After the deaeration, both autoclaves were returned to room temperature, and then heated at 220°C for 20 days in a thermostatic chamber.

After the completion of heating, both autoclaves were cooled to room temperature to remove the E-HFO-1132 and HFO-1234yf in the form of a gas from the gas phase portions.

After the gas was removed to such an extent that the inside of each autoclave reached atmospheric pressure, 7.0 g of residual liquid (oligomer O1) remaining in the autoclave for E-HFO-1132 and 7.5 g of residual liquid (oligomer O2) remaining in the autoclave for HFO-1234yf were collected.

The molecular weights of the oligomers O1 and O2 were measured using the equipment and method described below.

### Measurement of Number Average Molecular Weight by Gel Permeation Chromatography

The measurement was performed by using gel permeation chromatography (GPC) with an HLC-8020 (GPC apparatus) produced by Tosoh Corporation and Shodex columns (GPC KF-801 x 1, GPC KF-802 x 1, and GPC KF-806M x 2 connected in series). The number average molecular weights were calculated based on the data obtained by using tetrahydrofuran (THF) as a solvent (at 40°C, flow rate of 1 mL/min). The molecular weights were calibrated using standard polystyrene.

As a result of the calculation, the molecular weight of the oligomer O1, which is obtained by using E-HFO-1132 as a monomer, was found to be 550, and the molecular weight of the oligomer O2, which is obtained by using HFO-1234yf as a monomer, was found to be 520.

### Examples 1 and 2 and Comparative Examples 1 to 3

The following compounds W to Z were prepared as refrigerants. The oligomers (O1 and O2) were those prepared above.
W: E-HFO-1132 (CHF=CHF)
X: HFO-1234yf (CF₃CF=CH₂)
Y: HFC-32 (CH₂F₂)
Z: R410A (conventional refrigerant; mixture of HFC-32 and HFC-125)
O1: an oligomer obtained by using E-HFO-1132 as a monomer (the oligomer A of the present specification)
O2: an oligomer obtained by using HFO-1234yf as a monomer (the oligomer B of the present specification)
A: FVC68D (containing an extreme-pressure additive) produced by Idemitsu Kosan Co., Ltd., was prepared as a refrigeration oil mainly containing a polyvinyl ether compound having a constitutional unit represented by formula (2) below and having a kinematic viscosity at 40°C of about 70 cst.
B: A refrigeration oil that did not contain an extreme-pressure additive was prepared as a base oil. (The oil had the same constitutional unit and kinematic viscosity as A above.) 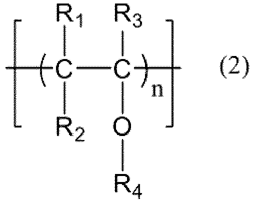
wherein R₁, R₂, R₃, and R₄ are the same or different, and each represents an alkyl group.

The refrigerant composition formulations of the Examples and Comparative Examples are shown in Table 1 below. Each component was mixed to obtain a refrigerant composition.

**Table 1**

| | Refrigerant | | | | Oligomer | | Refrigeration oil | |
|---|---|---|---|---|---|---|---|---|
| | W | X | Y | Z | O1 | O2 | A | B |
| Comparative Example 1 | 50 | 50 | | | | | 100 | |
| Comparative Example 2 | 50 | | 50 | | | | 100 | |
| Comparative Example 3 | | | | 100 | | | 100 | |
| Example 1 | 50 | 50 | | | 2 | 3 | | 100 |
| Example 2 | 50 | | 50 | | 3 | | | 100 |

### Test Example 1

### Measurement of Load-Carrying Properties (Seizure Load)

This measurement was performed in accordance with the Falex test method based on ASTM D3323. Specifically, a rotating steel journal was compressed between two stationary V-blocks with the compressed part immersed in each of the refrigerant compositions prepared above. The rotation speed of the rotating steel journal was adjusted to 290±10 rpm, and the block-compression load was increased until the rotating steel journal broke. The load at the breaking point was determined to be the minimum load-carrying properties, and the results were evaluated as 2 levels: a and b.

### Measurement of Abrasion Powder Amount

This measurement was performed in accordance with the Falex testing method based on ASTM D3323. Specifically, a rotating steel journal was compressed between two stationary V-blocks with the compressed part immersed in each of the refrigerant compositions prepared above. The rotation speed of the rotating steel journal was adjusted to 290±10 rpm, and the block-compression load was adjusted to 200 lb for a one-minute running-in period. Thereafter, the test apparatus was operated for 10 minutes under a 1000-lb load. The amount of abrasion powder formed from the rotating steel journal was measured and evaluated as 2 levels: a and b.

Common criteria for the evaluation of the load-carrying property measurement and abrasion powder amount measurement are shown below.

### Level a: Similar or slightly superior to the sliding properties of the standard (R410A)

### Level b: Slightly inferior to the standard

**Table 2**

| | Load-carrying properties | Abrasion powder amount |
|---|---|---|
| Comparative Example 1 | b | b |
| Comparative Example 2 | b | b |
| Comparative Example 3 | Standard | Standard |
| Example 1 | a | a |
| Example 2 | a | a |

### Comparative Examples 1 to 3

The refrigerant of Comparative Example 3 was the standard (R410A) and exhibited no problems in sliding properties. Specifically, R410A is a mixture of HFC-32 and HFC-125, and the sliding properties were not a problematic level when these HFCs were combined with a refrigeration oil containing an extreme-pressure additive.

Comparative Example 1, in which a mixture of E-HFO-1132, which is fluorinated ethylene, and HFO-1234yf, which is fluorinated propene, was used, and Comparative Example 2, in which a mixture of E-HFO-1132, which is fluorinated ethylene, and HFC-32 was used, exhibited lower load-carrying property values than Comparative Example 3, but they were not a problematic level.

### Examples 1 and 2

The test results of Examples 1 and 2, in which the oligomer O1 and/or oligomer O2 was added to the refrigeration oil B, which does not contain an extreme-pressure additive, show that the load-carrying properties were improved by about 5 to 10% and that the abrasion powder amount was decreased.

These results indicate that when a refrigerant composition containing at least fluorinated ethylene contains at least the oligomer O1, the sliding properties (lubricity) of the same level as the conventional refrigerant composition (R410A + extreme-pressure additive-containing refrigeration oil) or a slightly improved level compared with the conventional refrigerant composition is obtained.

## Claims

1. A refrigerant composition comprising a refrigerant containing a fluorinated hydrocarbon, and an oligomer that is a polymer of a halogenated hydrocarbon,
wherein
(1) the fluorinated hydrocarbon comprises fluorinated ethylene, and
(2) the oligomer is at least one of an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1, and an oligomer B having a molecular weight of 200 to 900 that is a polymer of a halogenated hydrocarbon B represented by C₃HₐF_{b}Cl_{c}, wherein a + b + c = 6, a represents an integer of 0 to 3, b represents an integer of 3 to 6, and c represents an integer of 0 to 1.

2. A refrigerant composition comprising a refrigerant containing a fluorinated hydrocarbon, and an oligomer that is a polymer of a halogenated hydrocarbon,
wherein
(1) the fluorinated hydrocarbon comprises fluorinated propene,
(2) the oligomer is an oligomer A having a molecular weight of 200 to 900 that is a polymer of a halogenated hydrocarbon A represented by C₂HₐF_{b}Cl_{c}, wherein a + b + c = 4, a represents an integer of 0 to 3, b represents an integer of 1 to 4, and c represents an integer of 0 to 1.

3. The refrigerant composition according to claim 1, wherein the fluorinated ethylene is at least one member selected from the group consisting of 1,1-difluoroethylene (HFO-1132a), Z-1,2-difluoroethylene (Z-HFO-1132), E-1,2-difluoroethylene (E-HFO-1132), and 1,1,2-trifluoroethylene (HFO-1123).

4. The refrigerant composition according to claim 2, wherein the fluorinated propene is at least one member selected from the group consisting of 2,3,3,3-tetrafluoropropene (HFO-1234yf), E-1,3,3,3-tetrafluoropropene (E-HFO-1234ze), Z-1,3,3,3-tetrafluoropropene (Z-HFO-1234ze), E-1,2,3,3,3-pentafluoropropene (E-HFO-1225ye), Z-1,2,3,3,3-pentafluoropropene (Z-HFO-1225ye), 1,1,3,3,3-pentafluoropropene (HFO-1225zc), and 3,3,3-trifluoropropene (HFO-1243zf).

5. The refrigerant composition according to claim 1 or 3, wherein the fluorinated hydrocarbon further comprises fluorinated propene.

6. The refrigerant composition according to any one of claims 1 to 5, wherein the content of the oligomer is 0.05 to 10 parts by mass per 100 parts by mass of the refrigerant.

7. The refrigerant composition according to any one of claims 1 to 6, wherein the refrigerant composition further comprises a refrigeration oil.

8. The refrigerant composition according to any one of claims 1 to 7, wherein the refrigerant composition is used for at least one member selected from the group consisting of mobile air conditioners, refrigerators, chillers, container refrigeration apparatuses, home air conditioners, and air conditioners for business use.

9. An oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1.

10. A composition comprising an oligomer that is a polymer of a halogenated hydrocarbon, the oligomer being an oligomer having a molecular weight of 200 to 900 that is a polymer of a halogenated hydrocarbon represented by C₂HₐF_{b}Cl_{c}, wherein a + b + c = 4, a represents an integer of 0 to 3, b represents an integer of 1 to 4, and c represents an integer of 0 to 1.
